(19) Europäisches Patentamt
European Patent Office
Office européen des brevets

(11) Publication number: 0 245 365 B1

(12) # EUROPEAN PATENT SPECIFICATION

(45) Date of publication of patent specification: **22.07.92**

(51) Int. Cl.[5]: **B41M 5/155**, C08G 65/38, C08G 65/44

(21) Application number: **86906671.2**

(22) Date of filing: **24.10.86**

(86) International application number: **PCT/US86/02259**

(87) International publication number: **WO 87/02939 (21.05.87 87/11)**

Divisional application 89118731.2 filed on 24/10/86.

(54) **Developer sheets, recording materials and resins useful therein.**

(30) Priority: **13.11.85 US 797585**
**21.01.86 US 820861**

(43) Date of publication of application: **19.11.87 Bulletin 87/47**

(45) Publication of the grant of the patent: **22.07.92 Bulletin 92/30**

(84) Designated Contracting States: **AT BE CH DE FR GB IT LI LU NL SE**

(56) References cited:
**DE-A- 3 037 992**
**DE-A- 3 430 735**
**US-A- 4 025 490**
**US-A- 4 165 102**
**US-A- 4 165 103**

**Klibanov, Journal of Applied Biochemistry, 2, 414-421. Published 1980.**

(73) Proprietor: **THE MEAD CORPORATION**
**Mead World Headquarters Courthouse Plaza Northeast**
**Dayton Ohio 45463(US)**

(72) Inventor: **POKORA, Alexander, R.**
**2048 Belltree Drive**
**Reynoldsburg, OH 43068(US)**
Inventor: **CYRUS, William, L., Jr.**
**RFD No. 1, Box 284**
**Ray, OH 45672(US)**

(74) Representative: **Deans, Michael John Percy et al**
**Lloyd Wise, Tregear & CO. Norman House**
**105-109 Strand**
**London WC2R OAE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

Danner, Archives of Biochemistry and Biophysics, 156, 759-763. Published 1973.

Alberti, Biological Detoxification, 349-352. Published 1982.

Singh, Biotechnology Letters, 7, 663-664. Published 1985.

Bollag, Pesticide Biochemistry and Physiology, 23, 261-272. Published 1985.

## Description

The present invention relates to developer sheets, to recording materials and to resins useful therein.

Recording materials utilizing developer resins to produce coloured images from colourless or substantially colourless materials are well-known. Specific examples of such recording materials include pressure-sensitive carbonless copying paper, heat-sensitive recording paper, electrothermographic recording paper, and the like. They are described in more detail in U.S. Patent Nos. 2,712,507; 2,730,456; 2,730,457; 3,418,250; 3,432,327; 3,981,821; 3,993,831; 3,996,156; 3,996,405 and 4,000,087, etc. A photographic material has been developed which utilizes this method for forming coloured images. See, for example, U.S. Patents Nos. 4,399,209 and 4,440,846 to The Mead Corporation.

Much research has been directed to developing new and improved developers for use in the aforementioned recording materials. The preferred developers are principally phenol derivatives and phenolic resins. Phenols, biphenols, methylene bis-diphenols, phenol-formaldehyde novolak resins, metal processed novolak resins, salicylic acid derivatives and salts are representative examples of the phenolic developers that have been used. See U.S. Patent No. 3,934,070 to Kimura teaching salicylic acid derivatives; U.S. Patent 3,244,550 to Farnham teaching biphenols, diphenols, and resinous products containing them; and U.S. Patent No. 3,244,549 to Farnham teaching phenol derivatives. Representative examples of phenolformaldehyde condensates previously used in the art are described in numerous patents, including U.S. Patent No. 3,672,935.

Among the colour developers, phenolformaldehyde condensates have been widely used because the exhibit excellent colour development, good coating properties (rheology) and good water resistance. While phenolformaldehyde condensates are advantageous colour developers, certain questions have arisen regarding their use in recording materials. Because they are prepared from formaldehyde, concern exists that they may be unsafe from both the standpoint of their manufacture and their use in recording materials.

As background to the process for the preparation of the phenolic resins, Alberti and Klibanov, BIOLOGICAL DETOXICATION, Chapter 22, Peroxidase for Removal of Hazardous Aromatics from Industrial Wastewaters, (1982), discloses that phenols can be removed from wastewaters as high molecular weight polymers by the action of peroxidase enzymes. The disclosed method relies on the ability of peroxidase enzyme to catalyze, with hydrogen peroxide, the oxidation of a variety of phenols and aromatic amines. Phenolic and aromatic amine free radicals are generated, which diffuse from the active center of the enzyme into solution, and polymerize to polyaromatic products. These high molecular weight polymers are water-insoluble and can be readily separated by filtration.

In accordance with a first aspect of this invention, there is provided a developer sheet comprising a support having a colour developer on one surface thereof, said developer being capable of reacting with an electron-donating colour precursor to produce a visible image, characterised in that said developer comprises formaldehyde-free phenolic developer resin represented by the formula (I):

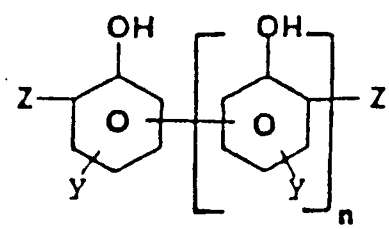

(I)

where n is an integer greater than or equal to 2, the phenolic units of the resin are directly bonded to one another through positions ortho or para to the hydroxy group, Y is present at a position meta or para to the hydroxy group and is selected from alkyl groups, halogen atoms, aryl groups , phenylalkyl groups, allyl groups, groups of the formula -COOR where R is a hydrogen atom, a phenylalkyl group or an alkyl group, amino groups of the formula $-NR_1R_2$ where $R_1$ and $R_2$ are the same or different and represent a hydrogen atom or an alkyl group, and Z is a hydrogen atom, an alkyl group, a halogen atom, an aryl group, a phenylalkyl group, or a -COOR group, or Z in conjunction with the adjacent meta position forms a condensed benzene ring; or a metal-modified, formaldehyde-free phenolic developer resin obtained by reacting said developer resin with a metal salt.

According to a second and alternative aspect of this invention, there is provided a recording material comprising a support having a layer of microcapsules on one surface thereof and having a colour developer co-deposited on said surface of said support with said microcapsules or deposited on the surface of a

separate support, said microcapsules containing in the internal phase a substantially colourless electron-donating compound, and said colour developer being capable of reacting with said electron-donating compound to generate a visible image; characterised in that said developer comprises formaldehyde-free phenolic developer resin represented by the formula (I):

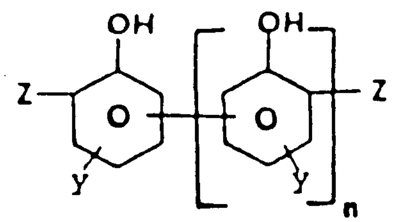

( I )

where n is an integer greater than or equal to 2, the phenolic units of the resin are directly bonded to one another through positions ortho or para to where n is an integer greater than or equal to 2, the phenolic units of the resin are directly bonded to one another through positions ortho or para to the hydroxy group, Y is present at a position meta or para to the hydroxy group and is selected from alkyl groups, halogen atoms, aryl groups, phenylalkyl groups, allyl groups, groups of the formula -COOR where R is a hydrogen atom, a phenylalkyl group or an alkyl group, amino groups of the formula $-NR_1R_2$ where $R_1$ and $R_2$ are the same or different and represent a hydrogen atom or an alkyl group, and Z is a hydrogen atom, an alkyl group, a halogen atom, an aryl group, a phenylalkyl group, or a -COOR group, or Z in conjunction with the adjacent meta position forms a condensed benzene ring; or a metal-modified, formaldehyde-free phenolic developer resin obtained by reacting said developer resin with a metal salt.

The invention also extends to a resin of the formula (I) as defined above and where n is greater than 2, but only in the following circumstances: when provided in an organic solvent; when free from water; or when dried. The invention further extends to the use of such a resin as a colour developing agent.

The developer resins are preferably prepared by free radical addition polymerization of a phenol using a peroxide-peroxidase enzyme system. The oxidation of phenol by horseradish peroxidase and hydrogen peroxide is known, although previously it has been performed in aqueous systems. See Danner et al., "The Oxidation of Phenol and Its Reaction Product by Horseradish Peroxidase and Hydrogen Peroxide," Archives of Biochemistry and Biophysics, 156, 759-763 (1973); and Sanders et al., "Peroxidase," Butterworth, Inc., Washington, D.C. (1964). It has been found, however, that the reaction proceeds in higher yields and provides a higher molecular weight product if it is performed in an organic and, more preferably, an organic-aqueous solvent system.

Biocatalytic oxidation of the phenol is carried out in an organic solvent and, more particularly, in an organic-aqueous solvent medium. We have found that the oxidative polymerization reaction proceeds in higher yields and is capable of providing a higher molecular weight product when it is performed in these solvent systems.

Reference should be made to the specification of our European Patent Application No. 89118731.2 (Publication No. 0355 868) which has been divided out of the present application, and which is concerned with processes for the preparation of phenolic resins, for further details.

Peroxidase and oxidase enzymes are known in the art and are commercially available. The most typical example of a peroxidase enzyme useful in production of the resins is horseradish peroxidase, but other peroxidases such as chloroperoxidase (and other haloperoxidases), lactoperoxidase, and bacterial peroxidases are also useful. In addition, oxidase enzymes such as fungul laccase and tyrosinase may be useful.

The amount of the enzyme used to make the phenolic resin will depend on its activity. The enzyme functions as a catalyst and is not consumed in the reaction. For commercially available enzymes, the enzyme can be reacted in an amount of about 10 milligrams to 5 grams per 100 grams phenol.

In accordance with a preferred procedure, the enzyme is dissolved in water and added to a solution of the phenol. The enzyme solution concentration is not particularly critical. It typically ranges from about 10 to 365 mg per liter. It is generally desirable to prepare an enzyme solution at a concentration such that it can be added in an approximately equal volume to the solution of the phenol, but this may vary.

The peroxide is typically hydrogen peroxide, but other peroxides may be used to generate free radicals. Examples of other potentially useful peroxides include methyl peroxide, ethyl peroxide, etc.

The peroxide is reacted in an amount of about 0.1 to 2.5 moles per 100 grams phenol and, more typically, about 0.1 to 0.5 moles per 100 grams phenol. Depending upon the nature of the oxidizing agent, it

is reacted neat or as a solution. The preferred oxidizing agent, hydrogen peroxide, is dissolved in water. Its concentration may range from about 0.001 to 1.0 mol per liter.

The phenol can be reacted in an aqueous or a non-aqueous solvent to produce the resin, but a preferred solvent is an organic-aqueous solvent system including water and a water-miscible or water-immiscible solvent. Representative examples of useful water-immiscible solvents include hexane, trichloroethane, methyl ethyl ketone, ethyl acetate, and butanol. Examples of useful water-miscible solvents include ethanol, methanol, dioxane, tetrahydrofuran (THF), dimethyl formamide, and acetone. The reaction is typically carried out at phenol concentrations of about 1 to 100 g per 100 ml solvent. Solvent-aqueous based systems are particularly preferred because they provide better yields and facilitate recovery and recycling of the enzyme.

As indicated above, a number of different procedures may be used to react the phenol. Solutions of the phenol, enzyme, and peroxide may be individually prepared and metered into a reaction vessel, or solutions of the phenol and enzyme may be pre-mixed and the peroxide gradually added thereto. Alternatively, the enzyme and phenol may be dissolved in a common solvent and the peroxide added. Those skilled in the art will appreciate that a number of reaction/mixing sequences are useful provided that the peroxide is added at a controlled rate which is approximately equal to the rate at which it is consumed such that the concentration of the peroxide does not build to a level at which it undesirably inhibits the reaction.

The organic-aqueous system formed upon mixing the phenol, enzyme and peroxide may contain water and an organic solvent in a volumetric ratio (water:organic) in the range of 1:10 to 10:1, more typically, 1:2 to 2:1, and most typically, about 1:1. The most preferred ratio will vary with the nature of the phenolic monomer(s) that is(are) polymerized.

The reaction of the phenol proceeds at room temperature, but temperatures of about 0 to 40°C can be used. The enzymes are temperature sensitive and can lose their activity if the reaction temperature becomes too high. For example, temperatures in excess of about 60°C render horseradish peroxidase inactive. However, some latitude exists, depending upon the solvent system which is used. Certain solvents can stabilize the enzyme and thereby permit the use of higher temperatures.

The activity of the enzyme is pH dependent. The reaction is preferably carried out at a pH in the range of 4 to 12 and, more preferably, 4 to 9. Buffers can be used to maintain pH, but are not usually required. One example of an useful buffer is a potassium phosphate buffer.

A pH is selected at which the enzyme is highly active. This will vary with the enzyme and its source. The most preferred pH for Sigma Type I peroxidase (a product of Sigma Chemical Company) is about 6.0. Using this enzyme, deionized water can be used to form the solvent system.

While reference is herein made to the bulk pH of the reaction system, those skilled in the art will appreciate that it is the pH in the micro-environment of the enzyme that is critical. It has been found that enzyme recovered at pH outside the aforementioned ranges is inactive or less active; whereas, if the same enzyme is redissolved at a pH within the aforementioned range and recovered, it is active. Thus, where the phenol is dissolved in a water immiscible solvent and the enzyme solution is dispersed in the solution of the phenol, it is the pH of the enzyme solution which is critical.

Phenolic resins so prepared are useful in a variety of applications depending on the nature of the phenol and the molecular weight of the resin. The resins are often mixtures of dimers, trimers, and very high molecular weight oligomers. Usually, the major part of the resin, i.e., greater than 50% by weight of the resin, is trimer or higher molecular weight compounds. The molecular weight of the phenolic resin can be adjusted depending upon its particular end use.

The present invention contemplates use of phenolic resins as developers in recording materials such as carbonless copy paper, heat-sensitive recording paper, electrothermographic recording paper and the like. The phenols used in developer resins are preferably para-substituted. The resins may range from about 500 to 5000 in molecular weight.

Phenols for use in practice of the present invention are represented by the formula (III):

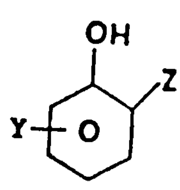

(III)

wherein Y and Z are selected from

hydrogen atoms, halogen atoms, alkyl groups, alkoxy groups, aryl groups, allyl groups, phenylalkyl groups, -COOR groups where R represents a hydrogen atom or a lower alkyl group, and $-NR_1R_2$ groups where $R_1$ and $R_2$ represent a hydrogen atom, an alkyl group, or a phenylalkyl group or Z in conjunction with the adjacent meta position forms a condensed benzene ring. Since polymerization proceeds via the ortho or para positions, when Y is at the ortho or para position, at least one of Y and Z must be a hydrogen atom or Z must form said condensed benzene ring.

As discussed above, the most useful phenols which can be polymerized for use in phenolic developer resins in accordance with the present invention are characterized in that they are para-substituted. Phenols which are not para-substituted tend generally to be too reactive and to generate very highly crosslinked compounds which may not be oil-soluble and which may not have good colour developing properties. Thus, the phenols which are preferred for use in the production of phenolic developer resins in accordance with the present invention are represented by the formula (IV):

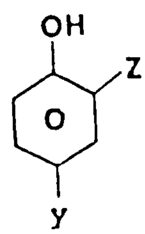

(IV)

where Y is selected from
an alkyl group, an aryl group, a phenylalkyl group, a COOR group, a $-NR_1R_2$ group, and a halogen atom, and Z is a hydrogen atom, a halogen atom, an alkyl group, an aryl group, a phenylalkyl group, or a -COOR group, or Z in conjunction with the adjacent meta position forms a condensed benzene ring.

Otherwise, the phenol adds as a terminal group as discussed below. At the para position, alkyl groups have a tendency to slow the reaction. The reaction appears to proceed best with a para substituted aryl group.

A single phenol or a mixture of phenols may be used.

In certain applications, it may be desirable to produce phenolic resins having certain terminal groups. This can be accomplished by reacting certain phenols in which the Y substituent is the para position and Y and Z are other than hydrogen or a condensed benzene ring. In this case, the resin contains the Z substituent as a terminal group since the polymerization proceeds via a hydrogen abstraction at the ortho position. Consequently, when the phenol is para-substituted, the latter Z-substituted phenols are typically used in a mixture with other phenols in which at least one of Y and Z is a hydrogen atom or Z is a condensed ring to provide copolymers. When the para position is unsubstituted, polymerization proceeds via the ortho and/or para position and the latter Z-substituted phenols can be incorporated mid-chain.

The alkyl group represented by Y and Z may contain up to 10 carbon atoms and include such alkyl groups as t-butyl, n-butyl, octyl, nonyl, etc. When $R, R_1$, and $R_2$ represent an alkyl group, it is typically a lower alkyl group having 1 to 4 carbon atoms.

Representative examples of alkoxy groups for Y and/or Z have 1 to 10 carbon atoms and include methoxy and ethoxy. When Y or Z is an aryl group, it is typically a phenyl group or substituted phenyl group such as a halogen-substituted phenyl group, an alkyl-substituted phenyl or a phenol group such as a 4'-phenol group.

Examples of a halogen atom include fluorine, chlorine, bromine and iodine.

Representative examples of phenylalkyl groups include benzyl, isopropylidene phenyl, butylidene phenyl, isopropylidene-4'-phenol, and butylidene-4'-phenol.

Specific examples of phenols which can be polymerized are phenol 4-t-butylphenol, 4-n-butylphenol, 4-ethylphenol, cresol, p-phenylphenol, p-octylphenol, p-nonylphenol, p-hydroxybenzoic acid, 4-hydroxynaphthoic acid, p,p'-biphenol, 4-aminosalicylic acid, salicylic acid, methyl salicylate, ethyl salicylate, 4,4'-isopropylidenediphenol, ethyl 4-hydroxybenzoate, etc.

The phenolic developer resins of the present invention are represented by the formula (I) above and more preferably, by the formula (II) above. The phenolic resins can be homopolymers or copolymers, i.e., the individual Y or Z groups in a given phenolic developer resin may be the same or different and the Y groups may be located at different positions in accordance with the formula (I).

The developers may range from about 500 to 5000 in molecular (number average) and preferably range

from about 1000 to 3000. The developer resins are often mixtures of dimers, trimers, and higher molecular weight oligomers. The molecular weight distribution of the resin will vary depending upon the nature of the phenol and the reaction conditions. Usually, the major part of the resin (i.e., greater than 50% by weight of the resin) is trimer or higher molecular weight compound, i.e., n is greater than 2 in formulae (I) and (II).

The phenolic developer resins may be metal-modified in a matter analogous to novolak developer resins to improve their reaction with color precursors and thereby improve the density and fastness of the image. For example, the phenolic developer resins can be modified by reaction with a salt of a metal selected from copper, zinc, cadmium, aluminium, indium, tin, chromium, cobalt, and nickel.

This modification can be made in an otherwise known manner. One method is by mixing and melting the resin with an alkanoate salt such as zinc propionate, zinc acetate, or zinc formate in the presence of an ammonium compound such as ammonium carbonate or ammonium acetate. The practice described in U.S. Patent No. 4,173,684 can also be used.

The zinc-modified phenolic developer resins can also be formed by reacting zinc oxide or zinc carbonate and ammonium benzoate or ammonium formate with the resins in a manner analogous to the teachings in U.S. Patent No. 4,165,102 and 4,165,103. Alternatively, the zinc-modified phenolic developer resins can be prepared by reaction with zinc chloride as shown in the examples below.

The metal content of the metal-modified phenolic developer resins should be more than 0.5 percent by weight and may range up to 15 percent by weight. Usually, a range of about 1.5 to 5 percent by weight is used.

In addition, to chemically modifying the phenolic developer resins as described above, other means conventionally used in the art to improve the developing ability of phenolic developer resins, can be used in conjunction with the phenolic developer resins.

For example, acidic metal salts can be incorporated into coatings of the phenolic developer resins as described in U.S. Patent Nos. 3,516,845 and 3,723,156. The phenolic developer resins can also be used in combination with other phenolic developer resins or compounds and need not be used alone.

Recording materials can be prepared in a conventional manner. To provide a developer sheet, the phenolic developer resin may be dissolved in an appropriate solvent (typically acetone) and applied to the surface of the paper by blade or roll coating or the like. Alternatively, the developer resin may be used in the form of a resin grind analogous to the resin grinds described in U.S Patent No. 3,924,027 to Saito et al. For example, the resin may be pulverized and mixed with an organic high molecular compound such as starch or styrene-butadiene latex. This mixture is dispersed in water or a solvent that does not readily dissolve the phenolic developer resin or the high molecular compound and coated on an appropriate support.

The developer resin is usually applied in an amount of about 0.2 to 0.4 lbs. (0.907 to 1.814 kg) of resin/1300 sq. ft. (121sq.m)(solids).

Where a self-contained recording material is desired, a mixture of the phenolic developer resin and microcapules containing the developer, can be coated upon a support as one layer or the developer and the microcapsules, can be applied in separate layers. For the preparation of photosensitive recording materials, see U.S. Patent Nos. 4,399,209 and 4,440,846 the disclosures of which are to be regarded as incorporated herein by reference.

The invention is illustrated in more detail by the following non-limiting examples.

Example I

30 mg of Sigma Type I horseradish peroxidase dissolved in 30 ml of 0.1 N potassium phosphate buffer, pH 9.0, 1.5 g of p-phenylphenol dissolved in 40 ml of ethanol and 12 ml of 3% hydrogen peroxide were each added to a dropping funnel. The dropping funnels were connected to a three-necked 300 ml round-bottom flask containing 100 ml of the phosphate buffer. While stirring constantly, the reagents were added drop-wise into the reaction flask. The reaction was allowed to proceed for ten minutes after the addition of the reagents. The product was collected by filtration and examined by thin layer chromatography.

Example II

300 milligrams of Sigma Type I horseradish peroxidase dissolved in 200 ml of 0.1 N potassium phosphate buffer, pH 9.0 and 8.3 g of p-phenylphenol with 6.7 g of salicylic acid dissolved in 200 ml of ethanol were each added to a dropping funnel. The dropping funnels were connected to a two-liter three-necked round-bottom flask containing 30 ml of 3% hydrogen peroxide dissolved in one liter of phosphate buffer. While stirring constantly, the reagents were added dropwise to the reaction flask. The reaction was

allowed to proceed for 15 mins. after the addition of the reagents. The product was collected by filtration and examined by thin layer chromatography.

The above product was air dried and redissolved in 100 ml ethanol containing 18.5 g of 1 N sodium hydroxide. To this, a solution of 100 ml water, 2 g zinc chloride and 1 ml of concentrated hydrochloric acid was added drop-wise. The pH was readjusted with 1 N sodium hydroxide until a precipitate formed and the product was collected by filtration.

Example III

30 milligrams of Sigma Type I horseradish peroxidase dissolved in 20 ml of 0.1 N potassium phosphate buffer, pH 9.0 and 1.5 g of 1-naphthol dissolved in 20 ml of ethanol were each added to a dropping funnel. The dropping funnels were connected to a 300 ml three-necked round-bottom flask containing 3 ml of 3% hydrogen peroxide dissolved in 100 ml of the phosphate buffer. While stirring constantly, the reagents were added drop-wise to the reaction flask. The reaction was allowed to proceed for 10 mins. after the addition of the reagents. The product was collected by filtration and analyzed by thin layer chromatography.

Example IV

30 milligrams of Sigma Type I horseradish peroxidase dissolved in 30 ml of 0.1 N potassium phosphate buffer, pH 9.0, 1.2 g of p-phenylphenol with 0.3 g of 4-aminosalicylic acid dissolved in 40 ml of ethanol and 12 ml of 3% hydrogen peroxide were each added to a dropping funnel. The dropping funnels were connected to a 300 ml three-necked round-bottom flask containing 100 ml of phosphate buffer. While stirring constantly, the reagents were added drop-wise to the reaction flask. The reaction was allowed to proceed for 15 mins. after the addition of the reagents. The product was collected by filtration and examined by thin layer chromatography.

Example V

30 milligrams of Sigma Type I horseradish peroxidase dissolved in 30 ml of 0.1 N potassium phosphate buffer, pH 9.0 and 12 ml of 3% hydrogen peroxide were each added to a dropping funnel. The dropping funnels were connected to a 500 ml three-necked round-bottom flask containing 6.67 g of bisphenol A dissolved in 100 ml ethanol and 174 ml of the phosphate buffer. While stirring constantly, the reagents were added drop-wise to the reaction flask. The reaction was allowed to proceed for 30 mins. after the addition of the reagents. The viscous organic phase containing product was collected from a separatory funnel and was examined by thin layer chromatography.

Example VI

10 g of p-phenylphenol with five grams of ethyl salicylate dissolved in 400 ml of ethanol, 120 ml of 3% hydrogen peroxide dissolved in 80 ml of 0.1 N potassium phosphate buffer, pH 9.0 and 120 mg of Sigma Type I horseradish peroxidase dissolved in 200 ml of the phosphate buffer were each added to Erlenmeyer flasks. While stirring constantly, the reagents were added drop-wise to a two-liter round-bottom flask using a peristaltic pump.

The reaction was allowed to proceed for 20 mins. after the addition of the reagents. The product was collected by filtration and examined by thin layer chromatography.

5 grams of product dissolved in 100 ml of acetone were added to a 500 ml round-bottom flask fitted with a condenser and containing 100 ml of an aqueous 50% potassium hydroxide solution. This solution was heated at reflux for 3 hrs. and allowed to cool to room temperature. Two grams of zinc chloride were added and allowed to stir for 10 mins. in the reaction flask. The reaction mixture was adjusted to pH 4 and poured into 1.2 liters of vigorously stirring cold water. The product was collected by filtration and examined by thin layer chromatography.

Example VII

7 milligrams of Sigma Type I horseradish peroxidase dissolved in 80 ml of 0.05 N potassium phosphate buffer, pH 5.0 was added to a 250 ml round-bottom flask containing 5 g of 4-t-butylphenol and 5 g of p-phenylphenol dissolved in 20 ml of ethyl acetate. While stirring constantly, 135 ml of 0.8% hydrogen peroxide was added dropwise to the reaction flask. The reaction was allowed to proceed for 20 mins. after

the addition of the peroxide. The organic phase containing product was collected, concentrated on a steam bath and examined by thin layer chromatography.

Example VIII

7 milligrams of Sigma Type I horseradish peroxidase dissolved in 80 ml of 0.05 N potassium phosphate buffer, pH 5.0 was added to a 250 ml round-bottom flask containing 8 g of 4-t-butylphenol and 2 g of p-phenylphenol dissolved in 20 ml of ethyl acetate. While stirring constantly, 137 ml of 0.8% hydrogen peroxide was added dropwise to the reaction flask. The reaction was allowed to proceed for 20 mins. after the addition of the peroxide. The organic phase containing product was collected, concentrated on a steam bath and examined by thin layer chromatography.

Example IX

7 milligrams of Sigma Type I horseradish peroxidase dissolved in 80 ml of 0.05 N potassium phosphate buffer, pH 5.0 was added to a 150 ml round-bottom flask containing 8 g of bisphenol A and 2 g of p-phenylphenol dissolved in 20 ml of ethyl acetate. While stirring constantly, 127 ml of 0.6% hydrogen peroxide was added dropwise to the reaction flask. The reaction was allowed to proceed for 20 mins. after the addition of the peroxide. The organic phase containing product was collected, concentrated on a steam bath and examined by thin layer chromatography. This resin was also zincated by a procedure described in U.S. No. Patent 4,025,490.

Example X

The ability of the resins to develop leuco dyes was tested by gravure printing a 3% solution of the resin on a strip of paper, spraying with CF detector, and determining the optical density on a MacBeth densitometer. Table I compares the optical densities of the above-mentioned experimental resins.

Table I

| Resin | Optical Density | |
|---|---|---|
| | Unzincated | Zincated |
| Example I | 28.41 | - |
| Example II | - | 29.47 |
| Example III | 36.40 | - |
| Example IV | 30.53 | - |
| Example V | 33.61 | - |
| Example VI | - | 25.67 |
| Example VII | 24.79 | - |
| Example VIII | 31.41 | - |
| Example IX | 29.53 | - |

## Claims

**1.** A developer sheet comprising a support having a colour developer on one surface thereof, said developer being capable of reacting with an electron-donating colour precursor to produce a visible image, characterised in that said developer comprises formaldehyde-free phenolic developer resin represented by the formula (I):

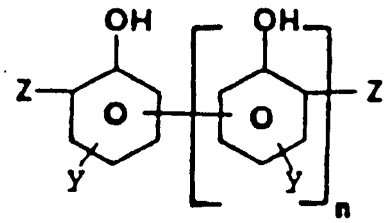

(I)

where n is an integer greater than or equal to 2, the phenolic units of the resin are directly bonded to one another through positions ortho or para to the hydroxy group, Y is present at a position meta or para to the hydroxy group and is selected from alkyl groups, halogen atoms, aryl groups, phenylalkyl groups, allyl groups, groups of the formula -COOR where R is a hydrogen atom, a phenylalkyl group or an alkyl group, amino groups of the formula $-NR_1R_2$ where $R_1$ and $R_2$ are the same or different and represent a hydrogen atom or an alkyl group, and Z is a hydrogen atom, an alkyl group, a halogen atom, an aryl group, a phenylalkyl group, or a -COOR group, or Z in conjunction with the adjacent meta position forms a condensed benzene ring; or a metal-modified, formaldehyde-free phenolic developer resin obtained by reacting said developer resin with a metal salt.

2. A developer sheet according to Claim 1, further characterised in that said developer resin has a molecular weight of approximately 500 to 5000.

3. A developer sheet according to Claim 1, further characterised in that said developer resin is represented by the formula (II):

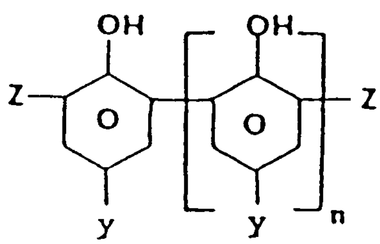

(II)

where n, Y and Z are as defined in Claim 1.

4. A developer sheet according to Claim 3, further characterised in that said resin has a molecular weight of about 1000 to 3000.

5. A developer sheet according to Claims 1 or 2, further characterised in that Z is a hydrogen atom and Y is in the para position and is a 2-(4'-phenol) isopropyl group.

6. A developer sheet according to any preceding claim, further characterised in that said metal is zinc.

7. A developer sheet according to any preceding claim, further characterised in that att least 50% of said developer resin is trimer or higher molecular weight resin.

8. A developer sheet according to any preceding claim, further characterised in that said phenol is selected from 4-t-butylphenol, 4-n-butylphenol, 4-ethylphenol, cresol, p-phenylphenol, p-octylphenol, p-nonylphenol, p-hydroxybenzoic acid, 4-hydroxynaphthoic acid, p,p'-biphenol, 4-aminosalicylic acid, salicylic acid, methyl salicylate, ethyl salicylate, 4,4'-isopropylidenediphenol and ethyl 4-hydroxybenzoate.

9. A recording material comprising a support having a layer of microcapsules on one surface thereof and having a colour developer co-deposited on said surface of said support with said microcapsules or deposited on the surface of a separate support, said microcapsules containing in the internal phase a

substantially colourless electron-donating compound, and said colour developer being capable of reacting with said electron-donating compound to generate a visible image; characterised in that said developer comprises formaldehyde-free phenolic developer resin represented by the formula (I):

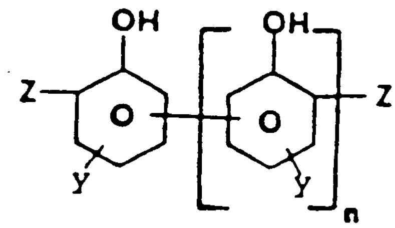

(I)

where n is an integer greater than or equal to 2, the phenolic units of the resin are directly bonded to one another through positions ortho or para to the hydroxy group, Y is present at a position meta or para to the hydroxy group and is selected from alkyl groups, halogen atoms, aryl groups, phenylalkyl groups, allyl groups, groups of the formula -COOR where R is a hydrogen atom, a phenylalkyl group or an alkyl group, amino groups of the formula $-NR_1R_2$ where $R_1$ and $R_2$ are the same or different and represent a hydrogen atom or an alkyl group, and Z is a hydrogen atom, an alkyl group, a halogen atom, an aryl group, a phenylalkyl group, or a -COOR group, or Z in conjunction with the adjacent meta position forms a condensed benzene ring; or a metal-modified, formaldehyde-free phenolic developer resin obtained by reacting said developer resin with a metal salt.

**10.** A solution in an organic solvent, of a resin of the formula (I) as defined in Claim 1, and wherein n is greater than 2.

**11.** A resin, essentially free from water, and having the formula (I) as defined in Claim 1, and wherein n is greater than 2.

**12.** A dried resin, having the formula (I) as defined in Claim 1, and wherein n is greater than 2.

**13.** The use as a colour developing agent of a resin having the formula (I) as defined in Claim 1, and wherein n is greater than 2.

**Revendications**

**1.** Feuille de développement comprenant un support ayant un révélateur de couleur sur l'une de ses faces, ledit révélateur étant capable de réagir avec un précurseur de couleur donneur d'électrons pour produire une image visible, caractérisée par le fait que ledit révélateur comprend un révélateur à base de résine phénolique exempte de formaldéhyde représentée par la formule (I) :

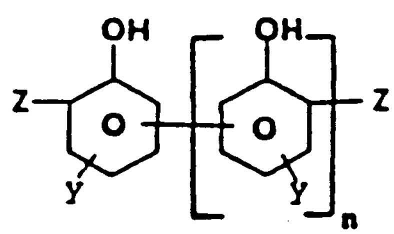

(I)

dans laquelle n représente un nombre entier supérieur ou égal à 2, les groupes phénoliques de la résine sont directement liés entre eux en position ortho ou para au groupe hydroxy, Y est présent en position méta ou para au groupe hydroxy et est choisi parmi des radicaux alkyles, des atomes d'halogènes, des radicaux aryles, des radicaux phénylalkyles, des radicaux allyles, des radicaux de la forme -COOR où R est un atome d'hydrogène, un radical phénylalkyle ou un radical alkyle, des radicaux amino de la forme $-NR_1R_2$ où $R_1$ et $R_2$ sont identiques ou différents et représentent un atome

d'hydrogène ou un radical alkyle, et Z est un atome d'hydrogène, un radical alkyle, un atome d'halogène, un radical aryle, un radical phénylalkyle ou un radical -COOR, ou Z en conjonction avec la position méta adjacente forme un noyau benzénique condensé; ou un révélateur à base de résine phénolique exempte de formaldéhyde, modifiée par un métal, obtenu par réaction de ladite résine de révélateur avec un sel métallique.

**2.** Feuille de développement selon la revendication 1, caractérisée en outre par le fait que la résine de révélateur présente une masse moléculaire comprise approximativement entre 500 et 5.000.

**3.** Feuille de développement selon la revendication 1, caractérisée en outre par le fait que ladite résine de révélateur est représentée par la formule (II) :

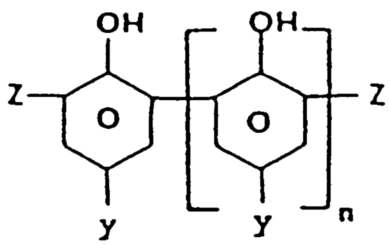

( I I )

dans laquelle n, Y et Z sont tels que définis dans la revendication 1.

**4.** Feuille de développement selon la revendication 3, caractérisée en outre par le fait que ladite résine présente une masse moléculaire comprise environ entre 1.000 et 3.000.

**5.** Feuille de développement selon l'une des revendications 1 ou 2, caractérisée en outre par le fait que Z est un atome d'hydrogène et Y est en position para et est le radical 2-(4'-phénol)isopropyle.

**6.** Feuille de développement selon l'une quelconque des revendications précédentes, caractérisée en outre par le fait que le métal est le zinc.

**7.** Feuille de développement selon l'une quelconque des revendications précédentes, caractérisée en outre par le fait que 50 % au moins de ladite résine de révélateur est une résine trimère ou une résine de masse moléculaire plus élevée.

**8.** Feuille de développement selon l'une quelconque des revendications précédentes, caractérisée en outre par le fait que ledit phénol est choisi parmi le 4-t-butylphénol, le 4-n-butylphénol, le 4-éthylphénol, le crésol, le p-phénylphénol, le p-octylphénol, le p-nonylphénol, l'acide p-hydroxybenzoïque, l'acide 4-hydroxynaphtoïque, le p, p'-biphénol, l'acide 4-aminosalicylique, l'acide salicylique, le salicylate de méthyle, le salicylate d'éthyle, le 4,4-isopropylidène diphénol et le 4-hydroxybenzoate d'éthyle.

**9.** Matériau d'enregistrement comprenant un support ayant une couche de microcapsules sur l'une de ses faces et ayant un révélateur de couleur co-déposé sur ladite face dudit support avec lesdits microcapsules ou déposé à la surface d'un support séparé, lesdites microcapsules contenant dans leur phase interne un composé donneur d'électrons sensiblement incolore, et ledit révélateur de couleur étant susceptible de réagir avec ledit composé donneur d'électrons pour engendrer une image visible; caractérisé par le fait que ledit révélateur comprend un révélateur à base de résine phénolique exempte de formaldéhyde représentée par la formule (I) :

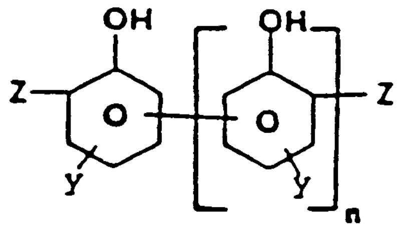

( I )

dans laquelle n représente un nombre entier supérieur ou égal à 2, les groupes phénoliques de la résine sont directement liés entre eux en position ortho ou para au groupe hydroxy, Y est présent en position méta ou para au groupe hydroxy et est choisi parmi des radicaux alkyles, des atomes d'halogènes, des radicaux aryles, des radicaux phénylalkyles, des radicaux allyles, des radicaux de la forme -COOR où R est un atome d'hydrogène, un radical phénylalkyle ou un radical alkyle, des radicaux amino de la forme $-NR_1R_2$ où $R_1$ et $R_2$ sont identiques ou différents et représentent un atome d'hydrogène ou un radical alkyle, et Z est un atome d'hydrogène, un radical alkyle, un atome d'halogène, un radical aryle, un radical phénylalkyle ou un radical -COOR, ou Z en conjonction avec la position méta adjacente forme un noyau benzénique condensé; ou un révélateur à base de résine phénolique exempte de formaldéhyde, modifiée par un métal, obtenu par réaction de ladite résine de révélateur avec un sel métallique.

**10.** Solution dans un solvant organique, d'une résine de formule (I) telle que définie dans la revendication 1, et dans laquelle n est supérieur à 2.

**11.** Résine, essentiellement exempte d'eau, de formule (I) telle que définie dans la revendication 1, et dans laquelle n est supérieur à 2.

**12.** Résine déshydratée, de formule (I) telle que définie dans la revendication 1, et dans laquelle n est supérieur à 2.

**13.** Utilisation, en tant qu'agent révélateur de couleur, d'une résine de formule (I) telle que définie dans la revendication 1, et dans laquelle n est supérieur à 2.

## Patentansprüche

**1.** Entwicklungsblatt, umfassend einen Träger mit einem Farbentwickler auf einer seiner Seiten, wobei der Entwickler fähig ist, mit einer elektronenabgebenden Farbvorstufe unter Erzeugung eines sichtbaren Bildes zu reagieren,
dadurch gekennzeichnet, daß der Entwickler ein formaldehyd-freies phenolisches Entwicklerharz enthält, das der Formel (I) entspricht:

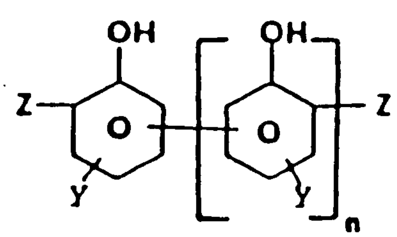

( I )

wobei n eine ganze Zahl $\geqq 2$ ist,

die phenolischen Einheiten des Harzes durch die Ortho- oder Para-Postion zur Hydroxy-Gruppe untereinander verbunden sind, Y in einer Meta- oder Para-Position zur Hydroxy-Gruppe angeordnet ist und ausgewählt ist aus der Gruppe Alkylgruppen, Halogenatome, Arylgruppen, Phenylalkylgruppen, Allylgruppen, Gruppen der Formel -COOR, in der R ein Wasserstoffatom, eine Phenylalkylgruppe oder

ein Alkylrest ist, Aminogruppen der Formel $-NR_1R_2$, in der $R_1$ und $R_2$ gleich oder verschieden sind und ein Wasserstoffatom oder eine Alkylgruppe darstellen, und Z ein Wasserstoffatom, eine Alkylgruppe, ein Halogenatom, eine Arylgruppe, eine Phenylalkylgruppe oder eine -COOR-Gruppe ist, oder Z in Verbindung mit der benachbarten Meta-Position einen kondensierten Benzolring bildet oder ein metallmodifiziertes, formaldehydfreies phenolisches Entwicklerharz ist, das erhalten wurde durch Reaktion des Entwicklerharzes mit einem Metallsalz.

**2.** Entwicklungsblatt gemäß Anspruch 1, dadurch gekennzeichnet, daß das Entwicklerharz ein Molekulargewicht von ca. 500 bis 5000 hat.

**3.** Entwicklungsblatt nach Anspruch 1, dadurch gekennzeichnet, daß das Entwicklerharz der Formel (II)

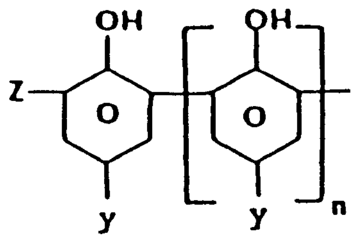

; (II)

entspricht, in der n, Y und Z den Definitionen des Anspruchs 1 entsprechen.

**4.** Entwicklungsblatt nach Anspruch 3, dadurch gekennzeichnet, daß das Harz ein Molekulargewicht von ungefähr 1000 bis 3000 hat.

**5.** Entwicklungsblatt nach Anspruch 1 oder 2, dadurch gekennzeichnet, daß Z ein Wasserstoffatom ist und Y in der Para-Position vorliegt und eine 2-(4'-Phenol) Isopropylgruppe ist.

**6.** Entwicklungsblatt nach einem der vorhergehenden Ansprüche, dadurch gekennzeichnet, daß das Metall Zink ist.

**7.** Entwicklungsblatt nach einem der vorhergehenden Ansprüche, dadurch gekennzeichnet, daß wenigstens 50 % des Entwicklerharzes trimer ist oder ein höheres Molekulargewicht aufweist.

**8.** Entwicklungsblatt nach einem der vorhergehenden Ansprüche, dadurch gekennzeichnet, daß das Phenol ausgewählt aus der Gruppe 4-t-Butylphenol, 4-n-Butylphenol, 4-Ethylphenol, Cresol, p-Phenylphenol, p-Octylphenol, p-Nonylphenol, p-Hydroxybenzoisäure, 4-Hydroxynaphthoe-Säure, p,p'-Biphenol, 4-Aminosalicylsäure, Salicylsäure, Methylsalicylat, Ethylsalicylat, 4,4'-Isopropylidenediphenol und Ethyl-4-Hydroxybenzoat.

**9.** Aufzeichnungsmaterial, umfassend einen Träger, der auf einer seiner Seiten eine Schicht von Mikrokapseln und einen Farbentwickler aufweist, wobei der Farbentwickler zusammen mit den Mikrokapseln auf der Oberfläche des Trägers abgeschieden ist oder auf der Oberfläche eines getrennten Trägers abgeschieden ist., wobei die Mikrokapseln in der internen Phase eine im wesentlichen farblose elektronenabgebende Verbindung enthalten und der Farbentwickler fähig ist, mit der elektronenabgebenden Verbindung zu reagieren, um ein sichtbares Bild zu erzeugen, dadurch gekennzeichnet, daß der Entwickler ein phenolfreies phenolisches Entwicklerharz enthält, das der Formel (I) entspricht:

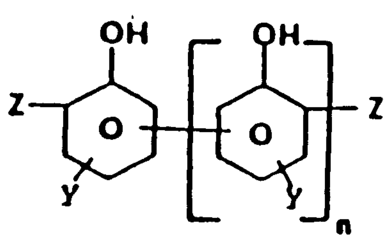

(I)

wobei n eine ganze Zahl ≧ 2 ist,

die phenolischen Einheiten des Harzes durch die Ortho- oder Para-Postion zur Hydroxy-Gruppe untereinander verbunden sind, Y in einer Meta- oder Para-Position zur Hydroxy-Gruppe angeordnet ist und ausgewählt ist aus der Gruppe Alkylgruppen, Halogenatome, Arylgruppen, Phenylalkylgruppen, Allylgruppen, Gruppen der Formel -COOR, in der ein Wasserstoffatom, eine Phenylalkylgruppe oder ein Alkylrest ist, Aminogruppen der Formel $-NR_1R_2$, in der $R_1$ und $R_2$ gleich oder verschieden sind und ein Wasserstoffatom oder eine Alkylgruppe darstellen, und Z ein Wasserstoffatom, eine Alkylgruppe, ein Halogenatom, eine Arylgruppe, eine Phenylalkylgruppe oder eine -COOR-Gruppe ist, oder Z in Verbindung mit der benachbarten Meta-Position einen kondensierten Benzolring bildet, oder ein metallmodifiziertes, formaldehydfreies phenolisches Entwicklerharz ist, das erhalten wurde durch Reaktion des Entwicklerharzes mit einem Metallsalz.

**10.** Eine Lösung eines Harzes gemäß Formel (I) nach Anspruch 1 in einem organischen Lösemittel, wobei n größer als 2 ist.

**11.** Ein im wesentlichen wasserfreies Harz entsprechend Formel (I) nach Anspruch 1, wobei n größer als 2 ist.

**12.** Ein getrocknetes Harz, entsprechend Formel (I) nach Anspruch 1, wobei n größer als 2 ist.

**13.** Verwendung eines Harzes der Formel (I) nach Anspruch 1, in der n größer als 2 ist, als Farbentwicklungsagenz.